# EUROPEAN PATENT SPECIFICATION

(11) **EP 3 320 766 B1**
(45) Date of publication and mention of the grant of the patent: **03.04.2019**
(21) Application number: 17206897.5
(22) Date of filing: 18.11.2015
(51) Int. Cl.: A01D 34/416, A01D 34/90

(54) **GRASS TRIMMER**
RASENSCHNEIDER
TONDEUSE À GAZON

(30) Priority: 25.11.2014 CN 201410688084; 25.11.2014 CN 201410687940; 25.11.2014 CN 201410687262
(43) Date of publication of application: 16.05.2018
(62) Divisional of application: 15195089.6
(73) Proprietor: Chervon (HK) Limited, Hong Kong (CN)
(72) Inventor: YUAN, Feng, Nanjing, Jiangsu 211106 (CN); PENG, Ming, Nanjing, Jiangsu 211106 (CN); GUO, Jianpeng, Nanjing, Jiangsu 211106 (CN); TANG, Zichun, Nanjing, Jiangsu 211106 (CN)
(74) Representative: Sun, Yiming

(56) References cited:
- DE-A1- 19 614 260
- GB-A- 1 562 948
- US-A- 2 153 771
- US-A- 2 708 820
- US-A- 5 313 770
- US-A- 6 023 847
- US-B1- 6 996 960

## Description

### FIELD OF THE DISCLOSURE

The present disclosure relates generally to garden tools and, more particularly, to a grass trimmer and a rotating assembly adapted for being driven by an output shaft of a grass trimmer.

In particular the invention relates to a rotating assembly, adapted for being driven by an output shaft of a grass trimmer, the rotating assembly comprising: a cutting head, capable of receiving or mounting a cutting member and rotating together with the cutting member, wherein the cutting head has a top end and defines a mounting hole through the top end for receiving a portion of the output shaft; and an anti-winding member positioned on the top end of the cutting head and defining a centre hole for being passed through by the output shaft, the anti-winding member being capable of rotating with the cutting head.

### BACKGROUND OF THE DISCLOSURE

A rotating assembly of the generic type defined above, and a related grass trimmer, are disclosed in US 6,023,847 A.

US 6,023,847 A describes an apparatus for cutting vegetation that includes a fixed gearhead from which a rotating driveshaft extends. A spool, including a spool housing and a spool element, are located below the gearhead and are coupled to the drive shaft to rotate in unison with the drive shaft. A cylindrically shaped deflecting ring extends between the top of the spool housing and the adjacent rotating protective disk. The deflecting ring prevents cut vegetation from winding around the portion of the driveshaft that extends between the gearhead and the spool.

US 6,996,960 B1 describes a grass trimming device with dual linehead spool hubs. The grass trimming device is adapted to simultaneously trim grass at both a substantially horizontal and a substantially vertical plane. The device includes actuation switches which also allow linehead spool hubs to be used in an independent manner.

Grass trimmers are power tools in the garden tool field, which are used to trim the lawn or remove the weeds by cutting the weeds.

Currently known grass trimmers include a power assembly, such as a motor or an engine, and a cutting head, the cutting head is driven by the power assembly to rotate, such that a cutting member mounted to the cutting head is driven to rotate and cut the weeds.

However, during the operation of the currently known grass trimmer, the fragments of the weeds or other debris may rotate with the cutting head and wind onto an output shaft of the power assembly. As a result, the cutting operation is obstructed.

The statements in this section merely provide background information related to the present disclosure and may not constitute prior art.

### SUMMARY

In one aspect of the disclosure, a rotating assembly is adapted for being driven by an output shaft of a grass trimmer , the rotating assemblycomprises: a cutting head, capable of receiving or mounting a cutting member and rotating together with the cutting member, the cutting head has a top end and defines a mounting hole through the top end for receiving a portion of the output shaft ; and an anti-winding member positioned on the top end of the cutting head and defining a centre hole for being passed through by the output shaft, the anti-winding member being capable of rotating with the cutting head. A top of the top end of the cutting head comprises a plurality of top ribs contacted with a bottom end of the anti-winding member, when the anti-winding member rotates with the cutting head, the plurality of top ribs being capable of generating centrifugal airflow flowing away from the cutting head.

In another aspect of the disclosure, a grass trimmer comprises: a cutting head for mounting a cutting member and an anti-winding member as in the previous aspect; a drive head having an output shaft for driving the cutting head to rotate, the drive head comprising a motor for driving the output shaft and a head housing for accommodating the motor; a power source device for providing power to the drive head; a handle device configured to be operated by a user; a connector for connecting the drive head and the power source device; wherein the anti-winding member is disposed between the cutting head and the head housing so as to fill the space between the cutting head and the head housing for preventing the output shaft from being wound to by grass or the like being cut by the cutting member, wherein the handle device is disposed between the drive head and the power source device, and wherein the output shaft is passed through the centre hole and inserted into the mounting hole so that the anti-winding member is rotatable with the cutting head, and when the anti-winding member rotates with the cutting head, the top ribs is capable of generating centrifugal airflow.

Further areas of applicability will become apparent from the description provided herein. It should be understood that the description and specific examples are intended for purposes of illustration only and are not intended to limit the scope of the claims hereinafter presented.

### BRIEF DESCRIPTION OF THE DRAWINGS

FIG. 1 is a schematic view of an exemplary grass trimmer.
FIG. 2 a part of the schematic view of the grass trimmer of FIG. 1.
FIG. 3 is a schematic view of a rotating assembly of the grass trimmer of FIG. 2.
FIG. 4 is an exploded view showing a part of the grass trimmer of FIG. 1.
FIG. 5 is a schematic view of an anti-winding member of the grass trimmer of FIG. 4.
FIG. 6 is an exploded view showing a top end of a cutting head of the grass trimmer.
FIG. 7 is a sectional view showing a part of the grass trimmer of FIG. 1, wherein an arrow shows the direction that weeds enter the cutting head.
FIG. 8 is a further schematic view of an anti-winding member and the cutting head.
FIG. 9 is a further schematic view of a grass trimmer.
FIG. 10 is a schematic view of the cutting device of FIG. 9, wherein a part of a housing is removed.
FIG. 11 is a schematic view of a motor of FIG. 10.
FIG. 12 is a sectional view of the motor of FIG. 11.
FIG. 13 is a schematic view of the grass trimmer of FIG. 9, wherein the flow direction of the airflow is illustrated.

The drawings described herein are for illustrative purposes only and are not intended to limit the scope of the present disclosure. Corresponding reference numerals indicate corresponding parts throughout the several views of the drawings.

### DETAILED DESCRIPTION

The following descriptions are merely exemplary in nature and in no way are intended to limit the invention claimed, its application, or uses.

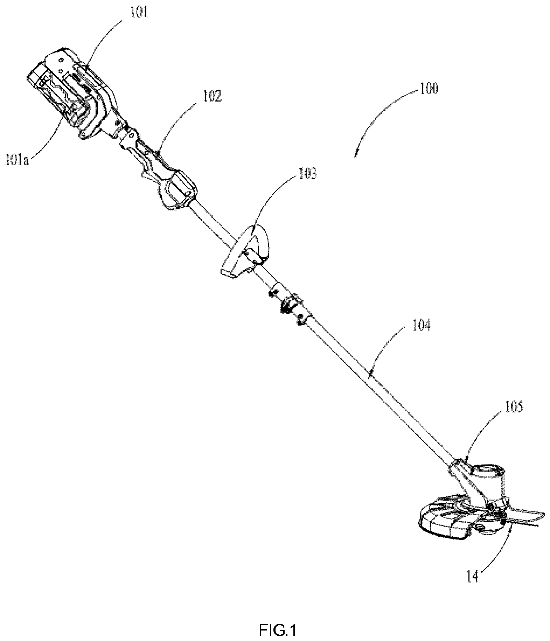

As shown in FIG. 1, a grass trimmer 100 includes a power source device 101, a handle device 102, a front handle 103, a connector 104 and a work device 105.

The power source device 101 is adapted to supply power to the grass trimmer 100, which may be a cordless power supply system having a battery pack 101a or a wired power supply system being able to transmit AC power from an external source to the grass trimmer 100. When the grass trimmer is driven by an engine, the electrical power source maybe omitted.

The handle device 102 is adapted to be operated by a hand of a user so as to control the grass trimmer 100. The front handle 103 is adapted to be grasped by another hand of the user so as to provide a comfortable operating posture. The handle device 102, the front handle 103 and the work device 105 are connected as a whole by the connector 104.

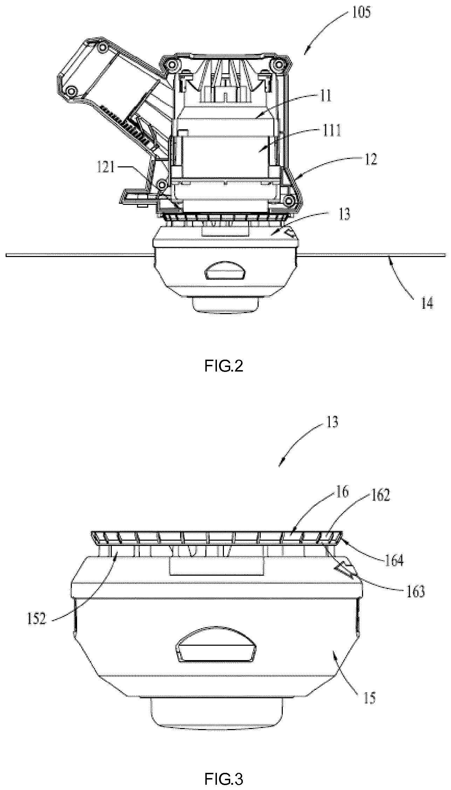

The work device 105 is functioned as a main part to cut weeds. As shown in FIG. 2, the work device 105 includes a power assembly 11 and a rotating assembly 13.

Referring to FIGS. 2-7, the power assembly 11 includes a motor 111, a head housing 12 and an output shaft 112.

The motor 111 is able to transform electric power or fuel energy into movement energy, which may be an electrical motor or an engine. The output shaft 112 is able to transmit the movement energy to the rotating assembly 13, so that the rotating assembly 13 is able to rotate about a fist axis 200 to cut weeds.

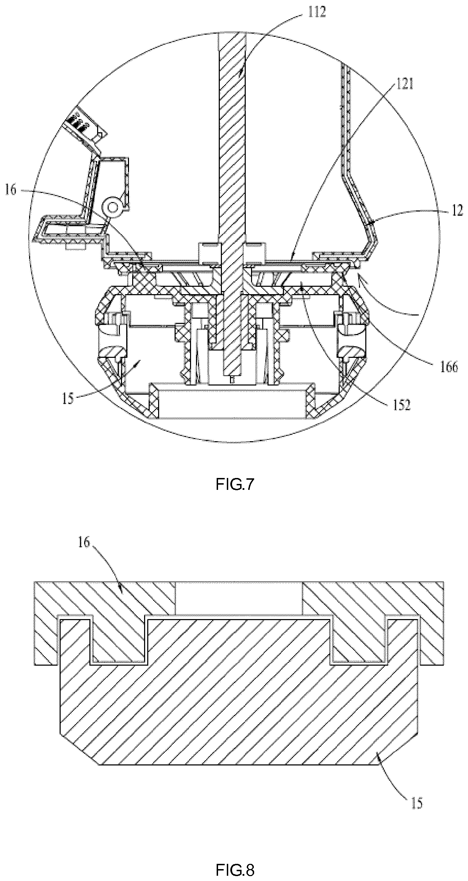

The output shaft 112 is driven by the motor 111 directly or indirectly. As shown in FIG. 7, the output shaft 112 is extended out of the head housing 12 to connect and drive the rotating assembly 13.

It will be appreciated that the power source device 101 may be provided with a motor, and the work device 105 may include a transmission which is driven by the motor by a long shaft in the connector 104. The output shaft 112 is driven by the transmission directly, the transmission is disposed in the head housing 12 as a driving mechanism.

The head housing 12 is adapted to accommodate the motor 111. And the head housing 12 is provided with an opening 121 which allows the output shaft 112 to extend out of the head housing 12.

Referring to FIGS. 2-6, the rotating assembly 13 includes a cutting member 14, a cutting head 15 and an anti-winding member 16.

The cutting member 14 is adapted to contact and cut the weeds. In the embodiment as shown in FIG. 1, the cutting member 14 is a cutting line. However, the cutting member 14 may be other cutting tools such as a cutting blade.

The cutting head 15 is adapted to mount or accommodate the cutting member 14, and drive the cutting member 14 to rotate. As shown in FIG. 7, when the cutting member 14 is a cutting line, the cutting head 15 is provided with a chamber for accepting the cutting line.

The anti-winding member 16 is adapted to protect the output shaft 12 against winding of the weeds there onto. Specifically, the anti-winding member 16 is disposed on a top side of the cutting head 15. When the rotating assembly 13 is assembled to the output shaft 12, the anti-winding member 16 is disposed between the cutting head 15 and the head housing 12 and close to the head housing 12. With the anti-winding member 16, the head housing 12 and the cutting head 15 are engaged more tightly. Firstly, a gap formed between the head housing 12 and the cutting head 15 in the direction of the first axis 200 is filled by the anti-winding member 16. Secondly, the anti-winding member 16 is arranged radially so that the weeds cannot move toward the output shaft 112. Therefore, the anti-winding member 16 can prevent the weeds from winding onto the output shaft 112. Referring to FIGS. 2, 3 and 5, the anti-winding member 16 includes a top end and a bottom end, the top end is bigger than the bottom end in the radial direction of the output shaft 112 so a distance between the periphery of the anti-winding member 16 and the head housing 12 is decreased gradually from the bottom up and along the direction from the bottom to the top of the cutting head 15, which makes it difficult for the weeds to enter into the gap.

The words "top" and "bottom" described in the description can be referred to the orientation of the drawings, which are just used to describe the relative positions, not the absolute positions, and which cannot be used to limit the protecting range of the claims.

The top end of the cutting head 15 is contacted with the anti-winding member 16. The cutting head 15 is provided with a mounting hole 153. An end of the output shaft 112 is inserted into the mounting hole 153. By way of example only, the anti-winding member 16 with an annular shape is provided with an centre hole 161. The output shaft 112 is able to pass through the anti-winding member 16 via the centre hole 161.

It is also contemplated that the anti-winding member 16 is not contacted with the top end of the cutting head 15. As shown in FIG. 8, one of the anti-winding member 16 and the cutting head 15 is provided with projections, and the other one is provided with recesses for engaging with the projections. A labyrinth structure is formed between the anti-winding member 16 and the cutting head 15. The anti-winding member 16 and the cutting head 15 are partially overlapped in the direction of the first axis 200 so the weeds are prevented from entering into the gap formed between anti-winding member 16 and the cutting head 15 and winding around the output shaft 112. The anti-winding member 16 is rotatably connected to the top end of the cutting head 15. Alternatively, the anti-winding member 16 is mounted to the head housing 12 and placed on the top end of the cutting head 15.

The anti-winding member 16 is connected fixedly and directly to the cutting head 15 so as to form a whole. The whole is mounted to the output shaft 112.

As shown in FIG. 7, the anti-winding member 16 is at least partially accommodated in the head housing 12. Specifically, the anti-winding member 16 is at least partially accommodated in a part of the head housing 12 where the output shaft 112 is extended from.

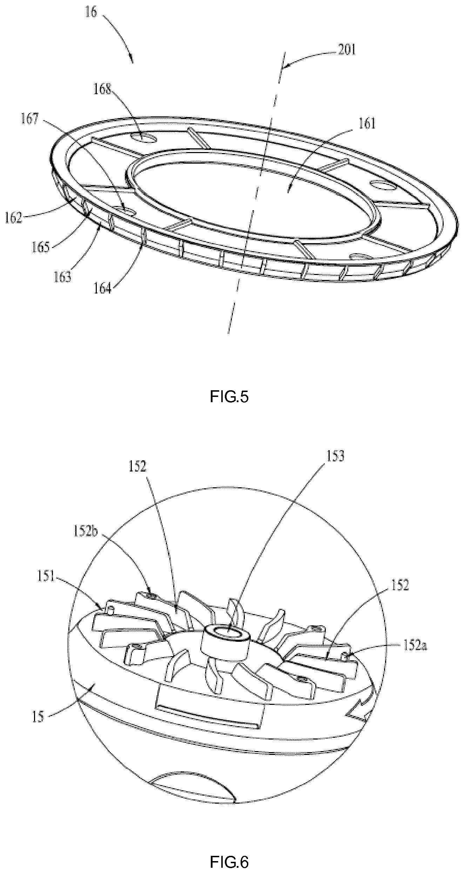

As shown in FIG. 5, the top end of the anti-winding member 16 is bigger than the bottom end. Specifically, the anti-winding member 16 includes an annular inclined surface 162 and an annular cylindrical surface 163 on the periphery. The annular inclined surface 162 is a side wall of a cone frustum. The annular cylindrical surface 163 is a side wall of a cylindrical. The annular inclined surface 162 and the annular cylindrical surface 163 have the same revolving axis 201 which coincides with the first axis 200 and an axis of the output shaft 112. The annular cylindrical surface 163 is disposed on the bottom of the annular inclined surface 162, which is also disposed on a side of the annular inclined surface 162 away from the head housing 12.

The anti-winding member 16 is provided with an auxiliary airflow generating part 165 on the periphery. When the auxiliary airflow generating part 165 is rotated, it is able to generate airflow. The auxiliary airflow generating part 165 includes ribs or fan blades arranged on the periphery of the anti-winding member 16.

The anti-winding member 16 further includes peripheral ribs 164 on the periphery surface. The peripheral ribs 164 protrude from the annular inclined surface 162. The peripheral ribs 164 are extended in the direction parallel to the annular inclined surface 162 from the annular inclined surface 162 to the annular cylindrical surface 163 and protrude from the annular cylindrical surface 163.

The peripheral ribs 164 are arranged uniformly on the periphery surface of the anti-winding member 16, which is able to generate airflow around the anti-winding member 16 flowing in the direction away from the anti-winding member 16 so as to blow away the weeds.

It is to be understood that the anti-winding member 16 may include other structure to generate airflow.

In the illustrated example, the cutting head 15 includes a main airflow generating part 151 which is able to generate airflow around the cutting head 15 flowing in the direction away from the cutting head 15 when the cutting head 15 is rotated about the first axis 200.

The cutting head 15 includes top ribs 152. The main airflow generating part 151 is formed by the top ribs 152.

The top ribs 152 are provided on the top end of the cutting head 15 and protruded from the cutting head 15 toward the anti-winding member 16. The top ribs 152 are disposed between the cutting head 15 and the anti-winding member 16. Each top rib 152 has a top end which is contacted with the bottom end of the anti-winding member 16.

As shown in FIG. 6, the top ribs 152 in the form of fan blades are able to generate centrifugal airflow around the cutting head 15. When the cutting head 15 is rotated, the airflow flows outward so as to blow away the weeds and debris and cool the motor 111.

The cutting head 15 is provided with a space on its top end for accepting the top ribs 152. The air passage between two adjacent top ribs is long enough so that the airflow generated is strong. While the peripheral ribs 164 on the periphery of the anti-winding member 16 can generate auxiliary airflow which cooperates with the airflow generated by the top ribs 152. Specifically, the airflow generated by the top ribs 152 flows in the radial direction of the output shaft 112 toward the outer periphery of the top ribs 152 while the airflow generated by the peripheral ribs 164 flows in the direction inclined to the output shaft 122 and deviating toward the cutting head 15 so it is difficult for the weeds and debris to enter into the gap between the anti-winding member 16 and the head housing 12.

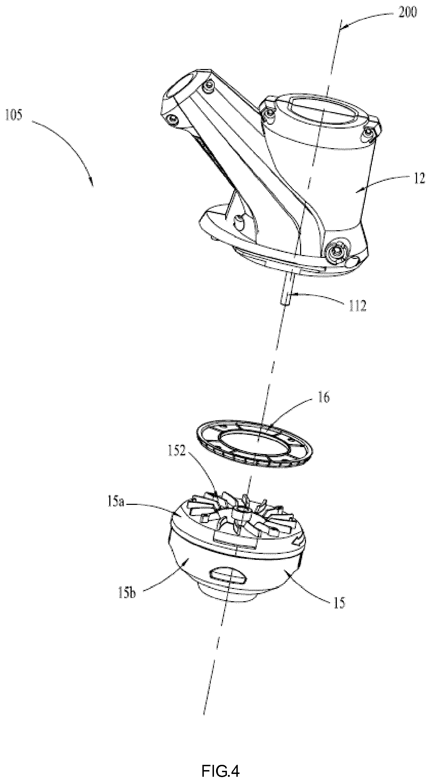

As shown in FIG. 4, the cutting head 15 includes a first shell 15a and a second shell 15b. The top ribs 152 are disposed on the first shell 15a.

The anti-winding member 16 is provided on its bottom end with a recess 166 for accepting the top ribs 152.

Referring to FIGS. 5-6, some of the top ribs 152 includes a locating lug 152a or a fixing aperture 152b. Correspondingly, the anti-winding member 16 includes locating holes and fixing holes 167, 168. The locating lug 152a is inserted into the locating hole so as to realize the location between the anti-winding member 16 and the cutting head 15. The anti-winding member 16 and the cutting head 15 are assembled by screws passing through the fixing holes 167, 168 and the fixing apertures 152b.

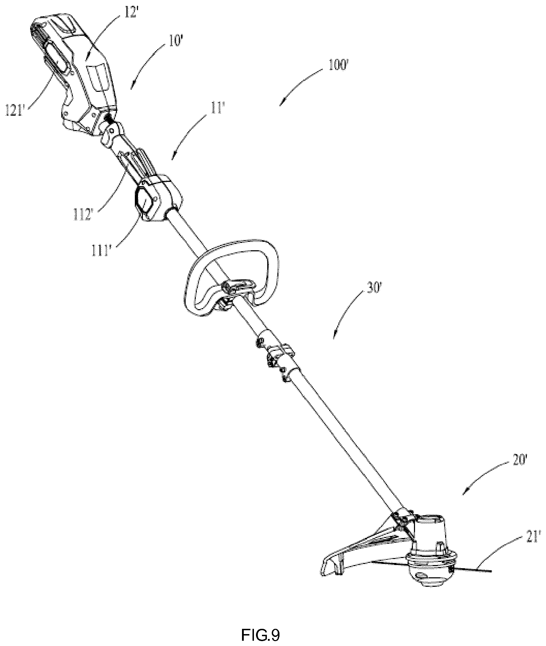

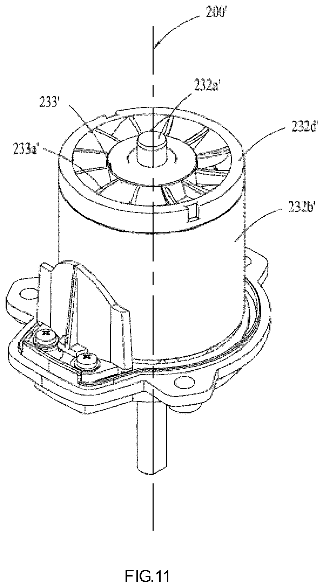

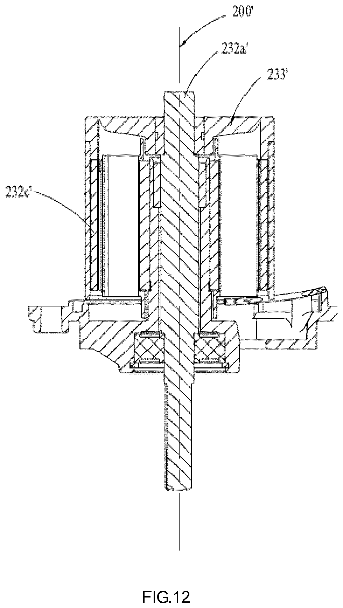

Referring to FIGS. 9-12, a grass trimmer 100'includes a main body 10', a work device 20' and a connector 30'. The connector 30' is adapted to connect the main body 10' and the work device 20'.

The main body 10' includes a handle device 11' and a power source device 12'. The main body 10' is disposed on a back end of the grass trimmer 100'. The power source device 12' is used to supply power to the grass trimmer 100', which includes a device housing 121'. The power source device 12'may be a battery that is detachably connectable to the device housing 121'or may be have battery in the device housing 121'. It is acknowledged that the power source device 12' may be an AC power source adapter. The handle device 11' is adapted to control the work device 20'. The handle device 11' includes an operating handle. The operating handle includes a handle shell 111' and a main switch 112'. The main switch 112' is adapted to be operated by the user to control the grass trimmer 100'.

The work device 20' is disposed on a front end of the grass trimmer 100', which includes a cutting member 21', a cutting head 22', a drive head 23' and an anti-winding member 24'.

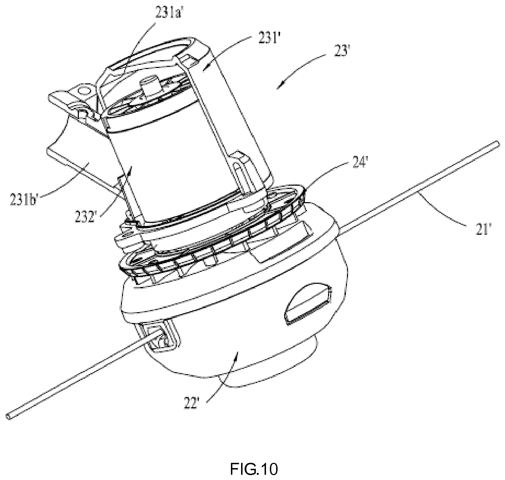

The cutting member 21' is used to contact and cut the weeds. As shown in FIG. 10, the cutting member 21' is a cutting line. However, the cutting member 21' also can be other cutting tools such as a cutting blade.

In this embodiment, the cutting head 22' has the same structure as the cutting head 15 as shown in FIGS. 1-7.

As described before, when the cutting head 15 rotates, the top rids 152 generate centrifugal airflow flowing away the cutting head 15. The same structures as the top ribs 152 of the cutting head 22' are defined as first airflow generating device.

Referring to FIGS. 10-12, the drive head 23' is adapted to drive the cutting head 22' to rotate. The drive head 23' includes a head housing 231', a motor 232' and a fan 233'. The motor 232' is an outer rotor motor, which includes a rotor and a stator.

The head housing 231' includes a containing part 231a' and a connecting part 231b'. The containing part 231a' and the connecting part 231b' are integrally formed. The containing part 231a' is formed with a chamber for accepting the stator and rotor. The connecting part 231b' is adapted to connect the work device 20' and the connector 30' mechanically.

The rotor includes a sleeve 232b', magnetic elements 232c' and a cover 232d'. The sleeve 232b' with a hollow cylindrical shape is contained in the chamber of the head housing 231' and is able to rotate relative to the head housing 231'. The magnetic elements 232c' are arranged uniformly on an inside wall of the sleeve 232b'. The cover 232d' is disposed on an end of the sleeve 232b' and rotated with the sleeve 232b'.

The stator is accommodated in the sleeve 232b' and connected with the head housing 231'. The output shaft 232a' is driven to rotate about a first axis 200' by the rotor so as to transmit the torque of the drive head 23' to the cutting head 22'.

The fan 233' is disposed on an end of the sleeve 232b' and may be integrally formed with the cover 232d'. The fan 233' is provided with a hole in the center for engaging with the output shaft 232a' so the fan 233' is driven to rotate by the rotor. The output shaft 232a' is driven to rotate by the fan 233'. The fan 233' includes a second airflow generating part 233a'. When the fan 233' is rotated about the first axis 200', the second airflow generating part 233a' is able to generate airflow blowing along the first axis 200' and toward the cutting head 22'. Alternatively, a part of the airflow generated by the fan 233' is obstructed by some structure, the airflow is partially blown toward the cutting head 22'. The fan 233' is defined as second airflow generating device and the second airflow generating device is capable of generating airflow blowing toward the outside of the head housing231' when the output shaft232a' rotates.

By way of example, the fan 233' may be an axial fan mounted in the head housing 231'. The fan 233' is able to generate airflow which not only blows away the weeds but also cools the motor 232'.

The anti-winding member 24' is connected fixedly and directly with the cutting head 22'. The anti-winding member 24' and the cutting head 22'are constructed as a whole. The whole is mounted to the output shaft 232a'. The cutting head 22' and the anti-winding member 24' are overlapped in the direction of the first axis 200' and the first airflow generating device of the cutting head 22' is located outside the head housing 231' so the airflow generated by the fan 233' and the airflow generated by the first airflow generating device are prevented from blowing to each other.

The anti-winding member 24' has the same structure as the anti-winding member 16 shown in FIGS. 1-7. As described before, when cutting head 15 rotates, the peripheral ribs 164 generate centrifugal airflow flowing away the cutting head 15. The same structures as the peripheral ribs 164 of anti-winding member 24' are defined as a third airflow generating device.

When the third airflow generating device is rotated, it is able to generate airflow around the anti-winding member 24' flowing in the direction away from the anti-winding member 24' and makes the air in the head housing 231' flow outward.

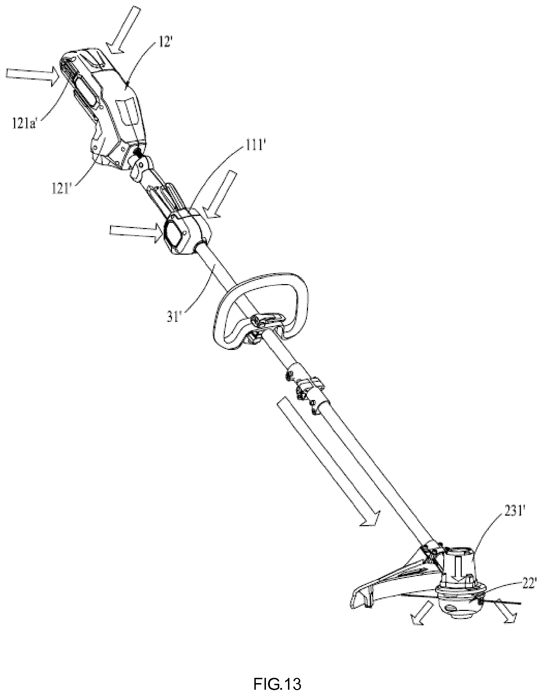

In order to prevent the winding of weeds and to cool the motor, the connector means 30' includes a hollow tube 31' with a connecting air flue therein. As shown in FIG. 13, an end of the hollow tube 31' is connected with the connecting part 231b' of the head housing 231' and the other end of the hollow tube 31' is connected with the power source device 12' so an end of the connecting air flue is communicated with the chamber of the head housing 231' while the other end of the connecting air flue is communicated with the device housing 121'. The device housing 121' is provided with a vent 121a' for communicating the inside and outside of the device housing 121'. Therefore, by the first airflow generating device and the second airflow generating device, the airflow can be entered into the device housing 121' from the outside, then through the connecting air flue, and entered into the head housing 231'. Finally the airflow is blown to the outside of the head housing 231' so the weeds close to the cutting head 22' are blown away and the motor 232' is cooled effectively. Otherwise, due to the airflow flowing through the space in the device housing 121', the battery and the circuit in this space are also cooled effectively.

The handle device may include a handle housing 111' for being handle by a user. The connecting air flue connects the inner space of the handle housing111' to the inner space of the head housing 231'; and handle housing 111' is provided with an air vent so as to let airflow blowing into the handle housing 111' to cool the control device which is disposed in the handle housing 111'.

In order to strengthen the airflow generated by the first airflow generating device and the second airflow generating device and to improve the effect of anti-winding, the connecting flue may further include through holes located on the hollow tube 31'. The through holes make the connecting flue communicate with the outside.

It will also be understood that the anti-winding member 24' can be formed using other structures which are able to flow the air.

The above illustrates and describes basic principles, main features and advantages of the present invention. Those skilled in the art should appreciate that the above embodiments do not limit the present invention in any form. Technical solutions obtained by equivalent substitution or equivalent variations all fall within the scope of the present invention.

## Claims

1. A rotating assembly (13), adapted for being driven by an output shaft (112) of a grass trimmer (100), the rotating assembly comprising:
a cutting head (15), capable of receiving or mounting a cutting member (14) and rotating together with the cutting member, wherein the cutting head has a top end and defines a mounting hole (153) through the top end for receiving a portion of the output shaft (112); and
an anti-winding member (16, 24') positioned on the top end of the cutting head and defining a centre hole (161) for being passed through by the output shaft, the anti-winding member being capable of rotating with the cutting head;
**characterized in that**
a top of the top end of the cutting head comprising a plurality of top ribs (152) contacted with a bottom end of the anti-winding member, when the anti-winding member rotates with the cutting head, the plurality of top ribs being capable of generating centrifugal airflow flowing away from the cutting head.

2. The rotating assembly of claim 1, wherein a top end of the anti-winding member is bigger than the bottom end in the radial direction.

3. The rotating assembly of claim 1, wherein the anti-winding member comprises a plurality of peripheral ribs protruding from a peripheral surface of the anti-winding member, when the anti-winding member rotates with the cutting head, the peripheral ribs are capable of generating centrifugal airflow.

4. The rotating assembly of claim 3, wherein the peripheral surface of the anti-winding member comprises an annular inclined surface and at least a portion of the peripheral ribs protrude from the inclined surface.

5. The rotating assembly of claim 3, wherein the peripheral surface comprises an annular inclined surface (162) and an annular cylindrical surface (163) disposed on the bottom of the annular inclined surface, and the annular inclined surface and the annular cylindrical surface have the same revolving axis.

6. The rotating assembly of claim 5, wherein the plurality of peripheral ribs are extended in the direction parallel to the annular inclined surface from the annular inclined surface to the annular cylindrical surface and protrude from the annular cylindrical surface.

7. The rotating assembly of claim 3, wherein the plurality of peripheral ribs are arranged uniformly on the periphery surface of the anti-winding member.

8. The rotating assembly of claim 1, wherein the anti-winding member (16, 24') is fixed to the top end of the cutting head.

9. The rotating assembly of claim 8, wherein some of the plurality of the top ribs comprise a locating lug (152a) or a fixing aperture (152b), the anti-winding member defines locating holes and fixing holes (167, 168), a locating lug being inserted into the locating hole so as to realize the location between the anti-winding member and the cutting head, the anti-winding member and the cutting head being assembled by screws passing through the fixing holes and the fixing apertures.

10. The rotating assembly of claim 1, wherein the anti-winding member is provided on its bottom end with a recess (166) for accepting the top ribs.

11. A grass trimmer (100), comprising:
a rotating assembly (13) as claimed in claim 1 including a cutting head (15) for mounting a cutting member (14) and an anti-winding member (16, 24');
a drive head (23') having an output shaft (112, 232a') for driving the cutting head to rotate, the drive head comprising a motor (232') for driving the output shaft and a head housing (231') for accommodating the motor;
a power source device (101) for providing power to the drive head;
a handle device (102) configured to be operated by a user;
a connector (104) for connecting the drive head and the power source device;
wherein the anti-winding member (16, 24') is disposed between the cutting head and the head housing so as to fill the space between the cutting head and the head housing for preventing the output shaft from being wound to by grass or the like being cut by the cutting member;
wherein the handle device is disposed between the drive head and the power source device;
wherein the output shaft is passed through the centre hole (161) and inserted into the mounting hole so that the anti-winding member is rotatable with the cutting head, and when the anti-winding member rotates with the cutting head, the top ribs are capable of generating centrifugal airflow.

12. The grass trimmer of claim 11, wherein the anti-winding member comprises a plurality of peripheral ribs (164) formed along a direction which inclines relative to the output shaft, the peripheral ribs protrude from a peripheral surface of the anti-winding member, when the anti-winding member rotates with the cutting head, and the peripheral ribs are capable of generating centrifugal airflow.

13. The grass trimmer of claim 12, wherein the anti-winding member is at least partially accommodated within the head housing, the peripheral surface of the anti-winding member comprises an annular inclined surface (162) and at least a portion of the peripheral ribs protrude from the inclined surface.

14. The grass trimmer of claim 13, wherein the anti-winding member comprises a top end bigger than the bottom end of the anti-winding member in the radial direction of the output shaft such that a distance between the periphery of the anti-winding member and the head housing is decreased gradually from the bottom up and along the direction from the bottom to the top of the cutting head.

15. The grass trimmer of claim 11, the drive head further comprises a fan (233') disposed in the head housing and driven by the motor for blowing airflow to the anti-winding member.

## Patentansprüche

1. Dreheinheit (13), die dafür ausgelegt ist, durch eine Antriebswelle (112) eines Rasentrimmers (100) angetrieben zu werden, wobei die Dreheinheit umfasst:
einen Schneidkopf (15), der in der Lage ist, ein Schneidelement (14) aufzunehmen oder zu befestigen und zusammen mit dem Schneidelement zu rotieren, wobei der Schneidkopf ein oberes Ende hat und ein Befestigungsloch (153) durch das obere Ende zum Aufnehmen eines Teils der Antriebswelle (112) festlegt; und
ein Antiwickelelement (16, 24'), das auf dem oberen Ende des Schneidkopfes positioniert ist und ein Mittelloch (161) festlegt, durch welches die Antriebswelle geschoben werden soll, wobei das Antiwickelelement in der Lage ist, mit dem Schneidkopf zu rotieren;
**dadurch gekennzeichnet, dass**
eine Oberseite des oberen Endes des Schneidkopfes, die eine Vielzahl von oberen Rippen (152) umfasst, die in Kontakt mit dem unteren Ende des Antiwickelelementes sind, wenn das Antiwickelelement mit dem Schneidkopf rotiert, wobei die Vielzahl von oberen Rippen in der Lage ist, einen zentrifugalen Luftstrom zu erzeugen, der weg vom Schneidkopf strömt.

2. Dreheinheit nach Anspruch 1, wobei ein oberes Ende des Antiwickelelementes größer als das untere Ende in der radialen Richtung ist.

3. Dreheinheit nach Anspruch 1, wobei das Antiwickelelement eine Vielzahl von peripheren Rippen umfasst, die von einer peripheren Fläche des Antiwickelelementes aus vorragen; wenn das Antiwickelelement mit dem Schneidkopf rotiert, sind die peripheren Rippen in der Lage, einen zentrifugalen Luftstrom zu erzeugen.

4. Dreheinheit nach Anspruch 3, wobei die periphere Fläche des Antiwickelelementes eine ringförmige geneigte Fläche umfasst, und mindestens ein Teil der peripheren Rippen ragt von der geneigten Fläche aus vor.

5. Dreheinheit nach Anspruch 3, wobei die periphere Fläche eine ringförmige geneigte Fläche (162) und eine ringförmige zylindrische Fläche (163) umfasst, die am Boden der ringförmigen geneigten Fläche angeordnet ist, und die ringförmige geneigte Fläche und die ringförmige zylindrische Fläche haben dieselbe Drehachse.

6. Dreheinheit nach Anspruch 5, wobei die Vielzahl von peripheren Rippen sich in der Richtung parallel zur ringförmigen geneigten Fläche von der ringförmigen geneigten Fläche zur ringförmigen zylindrischen Fläche erstrecken, und von der ringförmigen zylindrischen Fläche aus vorragen.

7. Dreheinheit nach Anspruch 3, wobei die Vielzahl von peripheren Rippen gleichförmig auf der Peripheriefläche des Antiwickelelementes angeordnet sind.

8. Dreheinheit nach Anspruch 1, wobei das Antiwickelelement (16, 24') am oberen Ende des Schneidkopfes fixiert ist.

9. Dreheinheit nach Anspruch 8, wobei einige der vielen oberen Rippen eine Rastnase (152a) oder eine Befestigungsöffnung (152b) umfassen, das Antiwickelelement definiert Aufnahmebohrungen und Befestigungsöffnungen (167, 168), wobei eine Rastnase in die Aufnahmebohrung eingeführt wird, um so die Lage zwischen dem Antiwickelelement und dem Schneidkopf zu realisieren, wobei das Antiwickelelement und der Schneidkopf durch Schrauben, die durch die Befestigungsöffnungen verlaufen, angebracht werden.

10. Dreheinheit nach Anspruch 1, wobei das Antiwickelelement an seinem unteren Ende mit einer Vertiefung (166) zum Aufnehmen der oberen Rippen versehen ist.

11. Rasentrimmer (100), umfassend:
eine Dreheinheit (13) nach Anspruch 1, die einen Schneidkopf (15) zur Befestigung eines Schneidelementes (14) und eines Antiwickelelementes (16, 24') umfasst;
einen Antriebskopf (23'), der eine Ausgangswelle (112, 232a') zum Antreiben des Schneidkopfes zum Drehen hat, wobei der Antriebskopf einen Motor (232') zum Antreiben der Ausgangswelle und ein Kopfgehäuse (231') zum Aufnehmen des Motors umfasst;
eine Energiequellenvorrichtung (101) zum Bereitstellen von Energie für den Antriebskopf;
eine Griffvorrichtung (102), die dafür ausgelegt ist, durch einen Benutzer betätigt zu werden; einen Verbinder (104) zum Verbinden des Antriebskopfes und der Energiequellenvorrichtung;
wobei das Antiwickelelement (16, 24') zwischen dem Schneidkopf und dem Kopfgehäuse angeordnet ist, um so den Raum zwischen dem Schneidkopf und dem Kopfgehäuse zu füllen, um zu verhindern, dass die Ausgangswelle, um die sich Gras oder dergleichen wickelt, durch das Schneidelement geschnitten wird;
wobei die Griffvorrichtung zwischen dem Antriebskopf und der Energiequellenvorrichtung angeordnet ist;
wobei die Ausgangswelle durch das Mittelloch (161) geschoben und in das Befestigungsloch eingeführt wird, sodass das Antiwickelelement mit dem Schneidkopf drehbar ist, und wenn das Antiwickelelement mit dem Schneidkopf rotiert, können die oberen Rippen einen zentrifugalen Luftstrom erzeugen.

12. Rasentrimmer nach Anspruch 11, wobei das Antiwickelelement eine Vielzahl von peripheren Rippen (164) umfasst, die entlang einer Richtung gebildet sind, welche sich relativ zur Ausgangswelle neigt, die peripheren Rippen ragen von einer peripheren Fläche des Antiwickelelementes vor, wenn das Antiwickelelement mit dem Schneidkopf rotiert, und die peripheren Rippen können einen zentrifugalen Luftstrom erzeugen.

13. Rasentrimmer nach Anspruch 12, wobei das Antiwickelelement zumindest teilweise innerhalb des Kopfgehäuses aufgenommen wird, die periphere Fläche des Antiwickelelementes umfasst eine ringförmige geneigte Fläche (162), und mindestens ein Teil der peripheren Rippen ragt von der geneigten Fläche aus vor.

14. Rasentrimmer nach Anspruch 13, wobei das Antiwickelelement ein oberes Ende umfasst, das größer als das untere Ende des Antiwickelelementes in der radialen Richtung der Ausgangswelle ist, derart dass ein Abstand zwischen der Peripherie des Antiwickelelementes und dem Kopfgehäuse sich allmählich von Boden nach oben und entlang der Richtung vom Boden zur Oberseite des Schneidkopfes verringert.

15. Rasentrimmer nach Anspruch 11, wobei der Antriebskopf ferner einen Lüfter (233') umfasst, der im Kopfgehäuse angeordnet ist und vom Motor zum Wegblasen eines Luftstroms zum Antiwickelelement angetrieben wird.

## Revendications

1. Ensemble rotatif (13), adapté pour être entraîné par un arbre secondaire (112) d'un coupe-bordure (100), l'ensemble rotatif comprenant :
une tête de coupe (15) capable de recevoir ou de monter un membre de coupe (14) et tournant conjointement avec le membre de coupe, dans lequel la tête de coupe a une extrémité supérieure et définit un trou de montage (153) à travers l'extrémité supérieure pour recevoir une partie de l'arbre secondaire (112) ; et
un membre anti-enroulement (16, 24') positionné sur l'extrémité supérieure de la tête de coupe et définissant un trou central (161) pour être passé au travers par l'arbre secondaire, le membre anti-enroulement étant capable de tourner avec la tête de coupe ;
**caractérisé en ce que**
un dessus de l'extrémité supérieure de la tête de coupe comprend une pluralité de nervures supérieures (152) mises en contact avec une extrémité inférieure du membre anti-enroulement, lorsque le membre anti-enroulement tourne avec la tête de coupe, la pluralité de nervures supérieures étant capable de générer un courant d'air centrifuge s'écoulant à distance de la tête de coupe.

2. Ensemble rotatif selon la revendication 1, dans lequel une extrémité supérieure du membre anti-enroulement est plus grande que l'extrémité inférieure dans la direction radiale.

3. Ensemble rotatif selon la revendication 1, dans lequel le membre anti-enroulement comprend une pluralité de nervures périphériques faisant saillie d'une surface périphérique du membre anti-enroulement, lorsque le membre anti-enroulement tourne avec la tête de coupe, les nervures périphériques sont en mesure de générer un courant d'air centrifuge.

4. Ensemble rotatif selon la revendication 3, dans lequel la surface périphérique du membre anti-enroulement comprend une surface annulaire inclinée et au moins une partie des nervures périphériques fait saillie de la surface inclinée.

5. Ensemble rotatif selon la revendication 3, dans lequel la surface périphérique comprend une surface annulaire inclinée (162) et une surface annulaire cylindrique (163) disposée sur le fond de la surface annulaire inclinée, et la surface annulaire inclinée et la surface annulaire cylindrique ont le même axe de rotation.

6. Ensemble rotatif selon la revendication 5, dans lequel la pluralité de nervures périphériques sont étendues dans la direction parallèle à la surface annulaire inclinée depuis la surface annulaire inclinée vers la surface annulaire cylindrique et font saillie depuis la surface annulaire cylindrique.

7. Ensemble rotatif selon la revendication 3, dans lequel la pluralité de nervures périphériques sont agencées de manière uniforme sur la surface périphérique du membre anti-enroulement.

8. Ensemble rotatif selon la revendication 1, dans lequel le membre anti-enroulement (16, 24') est fixé à l'extrémité supérieure de la tête de coupe.

9. Ensemble rotatif selon la revendication 8, dans lequel une partie de la pluralité de nervures supérieures comprend un taquet de placement (152a) ou une ouverture de fixation (152b), le membre anti-enroulement définissant des trous de placement et des trous de fixation (167, 168), un taquet de placement étant inséré dans le trou de placement de façon à réaliser le placement entre le membre anti-enroulement et la tête de coupe, le membre anti-enroulement et la tête de coupe étant assemblés par des vis passant à travers les trous de fixation et les ouvertures de fixation.

10. Ensemble rotatif selon la revendication 1, dans lequel le membre anti-enroulement est doté d'un creux (166) sur son extrémité inférieure pour recevoir les nervures supérieures.

11. Coupe-bordure (100), comprenant :
un ensemble rotatif (13) selon la revendication 1 incluant une tête de coupe (15) pour monter un membre de coupe (14) et un membre anti-enroulement (16, 24') ;
une tête d'entraînement (23') ayant un arbre secondaire (112, 232a') pour entraîner la tête de coupe en rotation, la tête d'entraînement comprenant un moteur (232') pour entraîner l'arbre secondaire et un logement de tête (231') pour recevoir le moteur ;
un dispositif de source de courant (101) pour fournir du courant à la tête d'entraînement ;
un dispositif de poignée (102) configuré pour être actionné par un utilisateur ;
un connecteur (104) pour connecter la tête d'entraînement et le dispositif de source de courant ;
dans lequel le membre anti-enroulement (16, 24') est disposé entre la tête de coupe et le logement de tête de façon à remplir l'espace entre la tête de coupe et le logement de tête pour éviter que l'arbre secondaire ne soit enroulé par de l'herbe ou similaire en train d'être coupé(e) par le membre de coupe ;
dans lequel le dispositif de poignée est disposé entre la tête d'entraînement et le dispositif de source de courant ;
dans lequel l'arbre secondaire est passé à travers le trou central (161) et inséré dans le trou de montage de façon à ce que le membre anti-enroulement puisse tourner avec la tête de coupe, et lorsque le membre anti-enroulement tourne avec la tête de coupe, les nervures supérieures sont en mesure de générer un courant d'air centrifuge.

12. Coupe-bordure selon la revendication 11, dans lequel le membre anti-enroulement comprend une pluralité de nervures périphériques (164) formées le long d'une direction qui s'incline par rapport à l'arbre secondaire, les nervures périphériques font saillie d'une surface périphérique du membre anti-enroulement, lorsque le membre anti-enroulement tourne avec la tête de coupe, et les nervures périphériques sont en mesure de générer un courant d'air centrifuge.

13. Coupe-bordure selon la revendication 12, dans lequel le membre anti-enroulement est au moins partiellement reçu à l'intérieur du logement de tête, la surface périphérique du membre anti-enroulement comprend une surface annulaire inclinée (162) et au moins une partie des nervures périphériques fait saillie de la surface inclinée.

14. Coupe-bordure selon la revendication 13, dans lequel le membre anti-enroulement comprend une extrémité supérieure plus grande que l'extrémité inférieure dans la direction radiale de l'arbre secondaire de telle sorte qu'une distance entre la périphérie du membre anti-enroulement et le logement de tête est réduite graduellement du bas vers le haut et le long de la direction du bas vers le haut de la tête de coupe.

15. Coupe-bordure selon la revendication 11, la tête d'entraînement comprend en outre un ventilateur (233') disposé dans le logement de tête et entraîné par le moteur pour souffler un courant d'air vers le membre anti-enroulement.
